# EUROPÄISCHE PATENTSCHRIFT

(11) **EP 1 239 975 B1**
(45) Veröffentlichungstag und Bekanntmachung des Hinweises auf die Patenterteilung: **23.06.2004**
(21) Anmeldenummer: 00991795.6
(22) Anmeldetag: 21.12.2000
(51) Int. Cl.: B05D 1/00

(54) **VERFAHREN UND VORRICHTUNG ZUR OBERFLÄCHENBESCHICHTUNG EINES INNENAUSBAUTEILES FÜR KRAFTFAHRZEUGE**
METHOD AND DEVICE FOR COATING THE SURFACE OF AN INTERIOR COMPONENT FOR MOTOR VEHICLES
PROCEDE ET DISPOSITIF DE REVETEMENT DE SURFACE D'UN ELEMENT DE CONSTRUCTION INTERNE DE VEHICULES AUTOMOBILES

(30) Priorität: 22.12.1999 DE 19961992
(43) Veröffentlichungstag der Anmeldung: 18.09.2002
(73) Patentinhaber: Erwin Behr Automotive GmbH, 73240 Wendlingen (DE)
(72) Erfinder: BERG, Matthias, 71711 Steinheim/Murr (DE); KUPFERER, Ralf, 70569 Stuttgart (DE); EHRATH, Martin, 73033 Göppingen (DE)
(74) Vertreter: Karrais, Martin
(86) Internationale Anmeldenummer: PCT/EP2000/013083
(87) Internationale Veröffentlichungsnummer: WO 2001/045860

(56) Entgegenhaltungen:
- EP-A- 0 978 369
- DE-C- 4 320 893

## Beschreibung

Die vorliegende Erfindung betrifft ein Verfahren zur Oberflächenbeschichtung eines Innenausbauteiles für Kraftfahrzeuge, bei dem zumindest eine Sichtseite des Innenausbauteiles mit einer vorzugsweise transparenten Oberflächenschicht versehen wird, indem man das Innenausbauteil im Bereich seiner zu beschichtenden Oberfläche im Abstand zu einer Wandung eines Formteiles positioniert, so daß sich zwischen der Wandung und der zu beschichtenden Oberfläche ein Spaltraum ausbildet, in den Spaltraum ein flüssiges Oberflächenbeschichtungsmaterial einfüllt und unter Beaufschlagung mit ultravioletter Strahlung aushärtet.

Die Erfindung betrifft außerdem eine Vorrichtung zur Durchführung eines derartigen Verfahrens sowie ein Innenausbauteil, das unter Anwendung des Verfahrens hergestellt ist.

Innenausbauteile mit einer beschichteten, zum Beispiel lackierten Oberfläche werden in zunehmendem Maße zur Innenausstattung von Kraftfahrzeugen eingesetzt. Hierbei kommen insbesondere Holzformteile zum Einsatz, die als massive Teile oder als Furnierteile ausgebildet sein können. Letztere sind auf ihrer Rückseite meist mit einem Verstärkungselement beispielsweise aus Kunststoff ausgestaltet. Auf die Sichtseite des Innenausbauteiles wird in der Regel eine durchsichtige Lack- oder Harzschicht aufgebracht, so daß eine meist glänzende und strapazierfähige Oberfläche erzeugt wird. Im Falle von Holzformteilen bleibt hierbei die Struktur des Holzes nicht nur sichtbar, sondern sie wird zusätzlich hervorgehoben. Zu diesem Zweck wird das Innenausbauteil üblicherweise mit einer ca. 0,5 mm bis etwa 0,8 mm dikken Lackschicht versehen.

In der Regel werden die Harze oder Lacke auf die zu beschichtende Oberfläche des Innenausbauteiles aufgespritzt oder auflackiert. Hierbei sind mehrere Lagen erforderlich, um die gewünschte Versiegelung und eine glänzende Oberfläche zu erhalten. Dies hat einen erheblichen Kosten- und Zeitaufwand zur Folge.

In der DE 41 24 297 C2 wird alternativ vorgeschlagen, eine Beschichtung aus Polymethylmethacrylat (PMMA) durch Spritzguß auf das Innenausbauteil aufzubringen. Hierbei wird das PMMA-Material stark erhitzt und unter sehr hohem Druck, üblicherweise über 400 bar, in Sekundenbruchteilen in eine Spritzgußform eingepreßt, in die das Innenausbauteil eingelegt wurde. Die Spritzgußform muß hierbei aufgrund der hohen Druck- und Temperaturbelastung sehr massiv ausgebildet sein.

In der DE 43 20 893 C1 wird vorgeschlagen, das Innenausbauteil in einen Hohlraum eines Formteiles einzulegen, wobei zwischen dem zu beschichteten Oberflächenbereich des Innenausbauteiles und der zugeordneten Wandung des Hohlraums ein Spaltraum ausgebildet wird, in den das flüssige Oberflächenbeschichtungsmaterial eingefüllt wird, nachdem der Hohlraum zuvor zumindest teilweise evakuiert wurde. Auch dieses Verfahren ist mit einem nicht unbeträchtlichen Aufwand verbunden.

Aufgabe der vorliegenden Erfindung ist es, ein Verfahren zur Oberflächenbeschichtung eines Innenausbauteiles für Kraftfahrzeuge anzugeben, das kostengünstig und auf einfache Weise durchgeführt werden kann.

Diese Aufgabe wird bei einem Verfahren der eingangs genannten Art erfindungsgemäß dadurch gelöst, daß man das Innenausbauteil mit dem Formteil verspannt.

Bei dem erfindungsgemäßen Verfahren ist es lediglich erforderlich, das zu beschichtende Innenausbauteil unter Ausbildung eines Spaltraumes im Bereich der zu beschichtenden Oberfläche an das Formteil anzulegen und dann mit dem Formteil zu verspannen. Anschließend wird das flüssige Oberflächenbeschichtungsmaterial in den Spaltraum eingefüllt und dort ausgehärtet, wobei die Härtung unter Beaufschlagung mit UV-Strahlung erfolgt. Es ist somit nicht erforderlich, mittels zweier Formhälften einen Hohlraum auszubilden, in den das zu beschichtende Innenausbauteil eingeführt wird, vielmehr kann das Innenausbauteil selbst mit dem Formteil verspannt werden. Dies kann beispielsweise mittels Spannbacken oder mit Hilfe eines Spannhebels erfolgen. Die Anwendung des Verfahrens zeichnet sich somit durch einen geringen apparativen Aufwand aus.

Vorzugsweise wird das flüssige Oberflächenbeschichtungsmaterial unter geringem Überdruck, insbesondere einem Überdruck von mindestens 0,2 bar, in den Spaltraum eingefüllt. Es hat sich gezeigt, daß bereits ein geringer Überdruck ausreichend ist, um eine auch hohen Anforderungen an die zu erzielende Oberflächengüte genügende Qualität der Oberflächenschicht zu erhalten.

Besonders günstig ist es, wenn das flüssige Oberflächenbeschichtungsmaterial unter einem Überdruck von etwa 0,3 bar bis ca. 3,5 bar, vorzugsweise 0,5 bis 2 bar, eingefüllt wird. Mit einem derartigen Überdruck läßt sich sicherstellen, daß sich das flüssige Oberflächenbeschichtungsmaterial gleichmäßig im Spaltraum verteilt, wobei praktisch keine Gasblasen ausgebildet werden.

Für das Oberflächenbeschichtungsmaterial kommt vorzugsweise ein Material mit mindestens zwei Komponenten zum Einsatz, wobei eine erste Komponente von Kunstharz gebildet wird und die zweite Komponente durch UV-strahlungsempfindliche Sensibilisatoren. Die Sensibilisatoren werden derart ausgewählt, daß sie bei Beaufschlagung mit UV-Strahlung im Oberflächenbeschichtungsmaterial eine Kettenreaktion auslösen, die zu einer Aushärtung führt. Der Anteil an UV-strahlungsempfindlichen Sensibilisatoren wird vorzugsweise derart gewählt, daß das Oberflächenbeschichtungsmaterial bei Beaufschlagung mit UV-Strahlung innerhalb eines Zeitraums von wenigen Minuten, beispielsweise weniger als 3 Minuten, zumindest soweit aushärtet, daß das mit der Oberflächenschicht versehene Innenausbauteil vom Formteil gelöst werden kann und handhabbar ist. Die gesamte Oberflächenbeschichtung kann somit innerhalb weniger Minuten durchgeführt werden.

Als Kunstharz kann vorzugsweise Polyester zum Einsatz kommen oder ein Kunstharz auf Polyurethan-, Acryl- oder Epoxybasis.

Die Beaufschlagung des Oberflächenbeschichtungsmaterials innerhalb des Spaltraumes kann dadurch erfolgen, daß die UV-Strahlung über Lichtleitfasern in den Spaltraum eingeführt wird. Bei einer besonders bevorzugten Ausführungsform des erfindungsgemäßen Verfahrens ist vorgesehen, daß man das in den Spaltraum eingefüllte Oberflächenbeschichtungsmaterial durch das entsprechend strahlungsdurchlässig ausgebildete Formteil hindurch mit UV-Strahlung beaufschlagt.

So kann beispielsweise vorgesehen sein, daß man das Formteil aus UV-strahlungsdurchlässigem Kunststoff oder einem entsprechenden Glasmaterial, beispielsweise Quarzglas herstellt.

Vorzugsweise verwendet man ein Formteil, daß nur eine geringe Absorption für UV-Strahlung aufweist, so daß ein möglichst großer Anteil der von einer UV-Strahlungsquelle bereitgestellten UV-Strahlung auf das Oberflächenbeschichtungsmaterial im Spaltraum auftrifft. Hierzu hat es sich als Vorteil erwiesen, wenn man das Formteil mehrteilig ausbildet mit einem im wesentlichen der Gestalt der zu beschichtenden Oberfläche des Innenausbauteiles entsprechenden, UV-strahlungsdurchlässigen Formwerkzeug und einem das Formwerkzeug abzustützenden Stützelement. Eine derartige mehrteilige Ausgestaltung des Formteiles ermöglicht es, je nach der gewünschten Funktion unterschiedliche Materialien auszuwählen, die jedoch in jedem Falle UV-strahlungsdurchlässig sind. Das Stützelement kann hierbei beispielsweise aus PMMA, Polycarbonat (PC), Polyester, Polypropylen (PP), Polyethylen (PE) oder aus Glas, insbesondere Quarzglas, hergestellt werden, während für das Formwerkzeug sich insbesondere der Einsatz von Silikon bewährt hat. Letzteres weist zum eine hohe UV-Strahlungsdurchlässigkeit auf, und zum anderen kann es sehr gut vom ausgehärteten Oberflächenmaterial abgetrennt werden, das heißt es weist praktisch keine Haftung am ausgehärteten Oberflächenmaterial auf. Außerdem hat der Einsatz des Silikonmaterials den Vorteil, daß auf einfache Weise ein Abguß erzeugt werden kann, um auf diese Weise praktisch jede beliebige Oberflächengestaltung für das Innenausbauteil zu erzielen, beispielsweise Verzierungen, Riffelungen und/oder Mattierungen.

Wird das vorzugsweise aus Silikonmaterial hergestellte Formwerkzeug mittels des Stützelementes abgestützt, so kann das Formwerkzeug mit einer relativ geringen Materialstärke ausgestaltet werden, so daß Strahlungsverluste durch Absorption besonders gering gehalten werden.

Alternativ kann das Formteil auch einstückig aus Silikonmaterial hergestellt werden. Um in diesem Fall dem Formteil die notwendige mechanische Stabilität zu verleihen, muß die Wandstärke ausreichend groß gewählt werden. Um dadurch bedingte Strahlungsverluste durch Absorption zu kompensieren, kann eine entsprechend intensive UV-Strahlungsquelle zum Einsatz kommen.

Von Vorteil ist es, wenn man das flüssige Oberflächenbeschichtungsmaterial vor dem Einfüllen in den Spaltraum entgast, beispielsweise durch Beaufschlagung mit einem Unterdruck.

Es hat sich gezeigt, daß insbesondere bei Anwendung des eingangs erwähnten geringen Überdruckes das flüssige Oberflächenbeschichtungsmaterial gleichmäßig im Spaltraum verteilt werden kann. Damit eventuell auftretende Luftbläschen nach der Aushärtung für einen Betrachter nicht sichtbar sind, hat es sich als vorteilhaft erwiesen, wenn man das zu beschichtende Innenausbauteil derart von oben auf das Formteil aufsetzt, daß die zu beschichtende Oberfläche während der Beschichtung die Unterseite des Innenausbauteiles bildet. Dies hat zur Folge, daß eventuell vorhandene Luftbläschen nach dem Einfüllen des Oberflächenbeschichtungsmaterials in den Spaltraum nach oben in Richtung auf das Innenausbauteil aufsteigen. Wird für letzteres ein poröses Holzformteil verwendet, so diffundieren die Gasoder Luftbläschen in das Holzformteil ein und sind nach der Aushärtung für einen Betrachter praktisch nicht erkennbar.

Zur Erzielung einer hochglänzenden Oberfläche kann man das Formteil im Bereich des Spaltraumes mit einer hochglänzenden Oberfläche versehen, insbesondere bei Einsatz eines Silikonmaterials für das Formteil oder das Formwerkzeug sind jedoch - wie bereits erwähnt - auch Strukturierungen möglich, um auf diese Weise beispielsweise eine matte Oberfläche oder eine geriffelte Oberfläche für die ausgehärtete Oberflächenschicht zu erzielen.

Der Erfindung liegt außerdem die Aufgabe zu Grunde, eine Vorrichtung zur Beschichtung eines Innenausbauteiles für Kraftfahrzeuge bereitzustellen, mit der das voranstehend erläuterte Verfahren durchgeführt werden kann.

Hierzu wird erfindungsgemäß eine Vorrichtung vorgeschlagen mit einem Formteil, an das das zu beschichtende Innenausbauteil unter Ausbildung eines Spaltraumes anlegbar ist, wobei die Vorrichtung dadurch gekennzeichnet ist, daß das Formteil zumindest im Bereich der zu beschichtenden Oberfläche des Innenausbauteils UV-strahlungsdurchlässig ausgebildet ist und daß die Vorrichtung eine Spanneinrichtung zum Verspannen des Innenausbauteiles mit dem Formteil sowie eine UV-Strahlungsquelle aufweist. Zum Beschichten ist es lediglich erforderlich, das Innenausbauteil an das Formteil anzulegen, wobei im Bereich der zu beschichtenden Oberfläche ein Spaltraum ausgebildet wird, in den das flüssige Oberflächenbeschichtungsmaterial eingefüllt wird, nachdem zuvor das Innenausbauteil mit dem Formteil verspannt wird. Um sicherzustellen, daß der gesamte Spaltraum im wesentlich gleichmäßig mit UV-Strahlung bestrahlt werden kann, ist das Formteil zumindest im Bereich der zu beschichtenden Oberfläche UV-strahlungsdurchlässig ausgestaltet, so daß zusätzliche Lichtleitelemente für die UV-Strahlung entfallen können.

Die zum Einsatz kommende Spanneinrichtung umfaßt vorzugsweise einen Rahmen sowie ein Spannelement, das auf der dem Formteil abgewandten Seite an das Innenausbauteil anlegbar ist. Der Rahmen dient hierbei der Halterung des Formteiles, das vorzugsweise mit dem Rahmen lösbar verbindbar ist.

Bei einer besonders bevorzugten Ausführungsform der erfindungsgemäßen Vorrichtung ist vorgesehen, daß das Formteil ein UV-strahlungsdurchlässiges, mechanisch belastbares Stützelement, beispielsweise eine Stützplatte, umfaßt zur Aufnahme der Spannkräfte der Spanneinrichtung.

Das Stützelement kann beispielsweise aus einem UV-strahlungsdurchlässigen Kunststoff- oder Glasmaterial gefertigt sein, zum Beispiel aus PMMA, PC, Polyester, PP, PE oder Glas, vorzugsweise Quarzglas.

Günstig ist es, wenn das Formteil ein im wesentlichen der Gestalt der zu beschichtenden Oberfläche des Innenausbauteiles entsprechendes, UV-strahlungsdurchlässiges Formwerkzeug aufweist, welches vorzugsweise aus Silikon gefertigt ist.

Um eine definierte Trennlinie zwischen dem zu beschichtenden Oberflächenbereich des Innenausbauteiles und einem unbeschichtenden Oberflächebereich zu erzielen, ist es günstig, wenn die Vorrichtung ein das Innenausbauteil im Bereich der zu beschichtenden Oberfläche in Umfangsrichtung umgebendes Dichtungselement umfaßt. Dadurch kann insbesondere sichergestellt werden, daß Befestigungselemente, die am Innenausbauteil vorgesehen sind, um dieses am Kraftfahrzeug festzulegen, nicht mit flüssigem Oberflächenbeschichtungsmaterial in Berührung kommen, so daß die Funktion der Befestigungselemente nicht durch ausgehärtetes Oberflächenbeschichtungsmaterial beeinträchtigt wird.

Hierbei ist es besonders günstig, wenn das Dichtungselement einstückig mit dem Formwerkzeug verbunden ist. So kann beispielsweise vorgesehen sein, daß das Formwerkzeug mit Dichtungselement aus Silikon hergestellt ist.

Bevorzugt bildet das Formteil eine Aufnahme oder Vertiefung zur Ausbildung des Spaltraumes aus, und auf die Aufnahme ist das Innenausbauteil aufsetzbar. Die Aufnahme kann beispielsweise wannenförmig ausgestaltet sein, so daß das Innenausbauteil in die Aufnahme soweit eingeführt werden kann, daß der gewünschte Spaltraum sichergestellt ist.

Wie bereits erläutert, wird das Innenausbauteil mit dem Formteil verspannt. Um trotz der Verspannung einen gleichbleibenden Abstand zwischen dem Innenausbauteil und dem Formteil sicherzustellen, ist es von Vorteil, wenn die Vorrichtung mindestens ein Abstandselement umfaßt, das im Bereich der zu beschichtenden Oberfläche das Innenausbauteiles positionierbar ist. So können beispielsweise vier Abstandselemente zum Einsatz kommen, die im Bereich des Spaltraumes gleichmäßig verteilt angeordnet sind. Günstig ist es hierbei, wenn das bzw. die Abstandeelemente aus silikon oder aus poliertem Metall gefertigt sind, da diese Materialien eine geringe Haftung am ausgehärteten Oberflächenbeschichtungsmaterial aufweisen.

Die nachfolgende Beschreibung bevorzugter Ausführungeformen der Erfindung dient im Zusammenhang mit der Zeichnung der näheren Erläuterung. Es zeigen:
- Figur 1:: Eine schematische Darstellung einer ersten Ausführungsform einer Vorrichtung zur Beschichtung eines Innenausbauteiles und
- Figur 2:: eine zweite Ausführungsform einer Vorrichtung zur Beschichtung eines Innenausbauteiles.

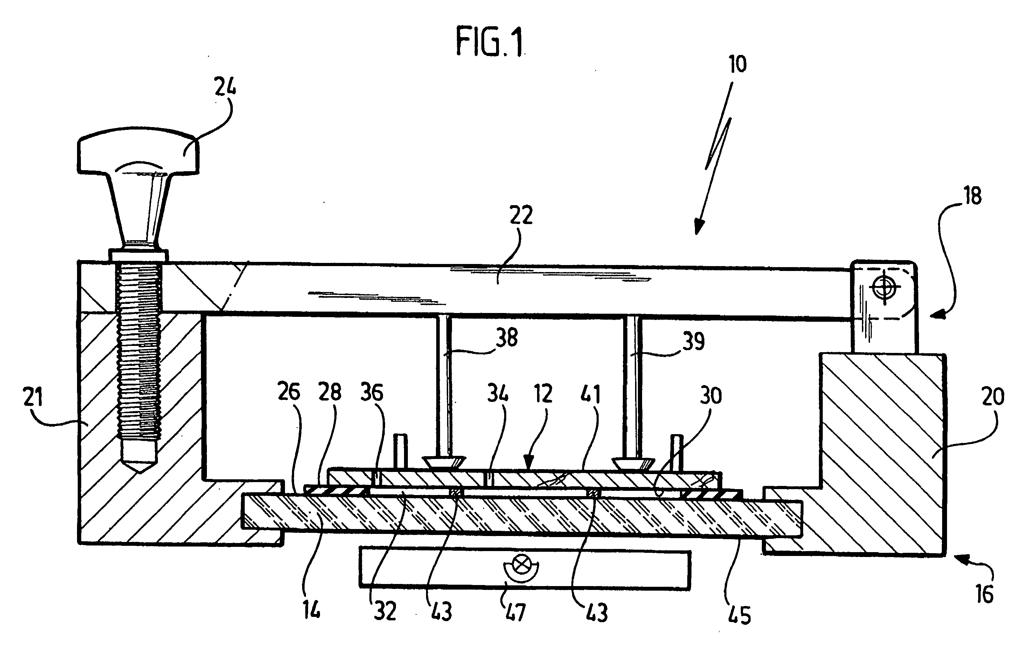

In Figur 1 ist eine insgesamt mit dem Bezugszeichen 10 belegte Vorrichtung zur Beschichtung eines Innenausbauteiles 12 dargestellt. Die Vorrichtung 10 umfaßt ein als Tragplatte 14 ausgebildetes Formteil aus Quarzglas, das nur eine geringe Absorption für Ultraviolet (UV) - Strahlung aufweist. Die Tragplatte 14 ist von einem Rahmen 16 einer Spanneinrichtung 18 umgeben. Der Rahmen ist einstückig mit zwei nach oben abstehenden Schenkeln 20, 21 verbunden, wobei an der dem Rahmen 16 abgewandten Oberseite des ersten Schenkels 20 ein verschwenkbarer Spannhebel 22 angelenkt ist, der mittels einer Spannschraube 24 mit dem zweiten Schenkel 21 verschraubt werden kann.

Auf ihrer dem Spannhebel 22 zugewandten Oberseite trägt die Tragplatte 26 ein Dichtungselement in Form eines Dichtringes 28 aus Silikonmaterial, und auf den Dichtring 28 ist das Innenausbauteil 12 aufgesetzt. Der Dichtring 28 stellt sicher, daß zwischen der zu beschichtenden Oberfläche 30 des Innenausbauteiles 12 und der Oberseite 26 der Tragplatte 14 ein Spaltraum 32 ausgebildet wird, der über eine im Innenausbauteil 12 vorgesehene Einfüllöffnung 34 mit einem flüssigen Oberflächenbeschichtungsmaterial befüllt werden kann. Damit beim Einfüllen des Oberflächenbeschichtungsmaterials die im Spaltraum 32 befindliche Luft entweichen kann, ist im Innenausbauteil 12 zusätzlich eine Auslaßöffnung 36 vorgesehen.

Mittels des Spannhebels 22 kann das Innenausbauteil 12 mit der Tragplatte 14 verspannt werden. Zu diesem Zweck ist der Spannhebel 22 einstückig mit in Richtung auf die Tragplatte 14 abstehenden Spannzapfen 38, 39 verbunden, deren freie Enden an die dem Spaltraum 32 abgewandte Rückseite 41 des Innenausbauteiles 12 anlegbar sind, so daß das Innenausbauteil 12 mit der Tragplatte 14 verspannt wird.

Im Bereich des Spaltraumes 32 sind zur Abstützung des Innenausbauteiles 12 auf der Oberseite 26 der Tragplatte 14 mehrere Abstandshalter 43 angeordnet, so daß trotz der einwirkenden Spannkraft ein gleichbleibender Abstand von beispielsweise 0,5 mm bis etwa 0,8 mm zwischen der zu beschichtenden Oberfläche 30 des Innenausbauteiles 12 und der Oberseite 26 der Tragplatte 14 gewährleistet wird. Die Abstandshalter 43 sind vorzugsweise ebenso wie der Dichtring 28 aus Silikon gefertigt, da dieses praktisch keine Haftung am ausgehärteten Oberflächenbeschichtungsmaterial aufweist.

Auf der dem Innenausbauteil 12 abgewandten Unterseite 45 der Tragplatte 14 ist eine in der Zeichnung nur schematisch dargestellte UV-Strahlungsquelle 47 angeordnet, so daß der Spaltraum 32 nach der Befüllung mit flüssigem Oberflächenbeschichtungsmaterial durch die Tragplatte 14 hindurch mit UV-Strahlung beaufschlagt werden kann. Das Oberflächenbeschichtungsmaterial ist zweikomponentig ausgestaltet mit einem Polyester als einer ersten Komponente und mit UV-Sensibilisatoren als einer zweiten Komponente, wobei letztere bei UV-Strahlungsbeaufschlagung eine Aushärtung des Polyesters bewirken.

Um das Innenausbauteil im Bereich der Oberfläche 30 zu beschichten ist es lediglich erforderlich, daß Innenausbauteil 12 auf die Tragplatte 14 und den Dichtring 28 aufzusetzen und anschließend mittels der Spannvorrichtung 18 mit der Tragplatte 14 zu verspannen. Nunmehr kann das flüssige Oberflächenbeschichtungsmaterial über die Einfüllöffnung 34 in den Spaltraum 32 eingefüllt und mittels UV-Strahlungsbeaufschlagung ausgehärtet werden. Das beschichtete Innenausbauteil 12 kann dann wieder von der Tragplatte 14 gelöst werden. In den meisten Fällen ist eine weitere Bearbeitung des beschichteten Innenausbauteiles 12 nicht mehr erforderlich.

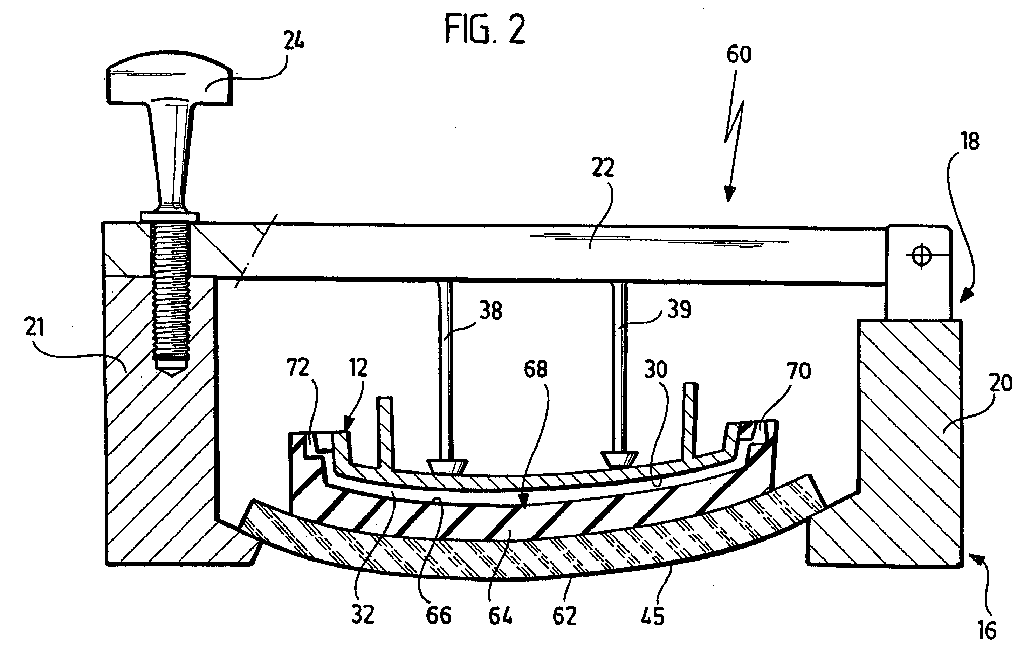

In Figur 2 ist eine alternative Ausgestaltung einer Vorrichtung zur Beschichtung des Innenausbauteiles dargestellt. Diese ist insgesamt mit dem Bezugszeichen 60 belegt und weist einen ähnlichen Aufbau auf wie die in Figur 1 dargestellte Ausführungsform. Für identische Bauteile werden deshalb in Figur 2 diesselben Bezugszeichen verwendet wie in Figur 1. Die in Figur 2 dargestellte Ausführungsform unterscheidet sich im wesentlichen dadurch, daß ein zweiteiliges Formteil zum Einsatz kommt, wobei zusätzlich zu einer Tragplatte 62 ein Formwerkzeug 64 aus Silikonmaterial vorgesehen ist, das auf seiner der Tragplatte 62 abgewandten Oberseite 66 eine wannenförmige Aufnahme 68 ausbildet, deren Form im wesentlichen der Gestalt des in Figur 2 konvex gekrümmten Innenausbauteiles 12 entspricht.

Das Formwerkzeug 64 ist aus Silikon hergestellt und wird von der Tragplatte 62, die aus einem Quarzglas gefertigt ist, abgestützt. Zur Befüllung des sich zwischen der zu beschichteten Oberfläche 30 des Innenausbauteiles 12 und der Oberseite 66 des Formwerkzeuges 44 ausbildenden Spaltraumes 32 mit flüssigem Oberflächenbeschichtungsmaterial umfaßt das Formwerkzeug 64 einen Einfüllkanal 70 sowie einen Auslaßkanal 72.

Mittels der Spannvorrichtung 18 kann das Innenausbauteil 12 mit dem Formwerkzeug 64 und der Tragplatte 62 verspannt werden, und anschließend kann über den Einfüllkananl 70 flüssiges Oberflächenbeschichtungsmaterial in den Spaltraum 32 eingefüllt werden. Auch bei der in Figur 2 dargestellten zweiten Ausführungsform wird auf der dem Innenausbauteil 12 abgewandten Seite der Tragplatte 62 eine in Figur 2 nicht dargestellte UV-Strahlungsquelle positioniert, so daß der Spaltraum 32 zur Aushärtung des Oberflächenbeschichtungsmateriales mit UV-Strahlung beaufschlagt werden kann.

Der Einsatz des Silikon-Formwerkzeuges 64 hat den Vorteil, daß auch kompliziert geformte Innenausbauteile 12 auf einfache Weise beschichtet werden können, da mittels des Silikonmaterials auf einfache Weise ein Abguß des Innenausbauteiles 12 im Bereich der zu beschichtenden Oberfläche 30 hergestellt und das Silikonmaterial mittels der Tragplatte 62 abgestützt werden kann.

Sowohl bei dem in Figur 1 dargestellten ersten Ausführungsbeispiel als auch bei der schematisch in Figur 2 dargestellten zweiten Ausführungsform wird das flüssige Oberflächenbeschichtungsmaterial unter einem geringen Überdruck von ca. 0,5 bis 2 bar in den Spaltraum 32 eingefüllt. Zuvor kann das Oberflächenbeschichtungsmaterial entgast werden, indem es mit Unterdruck beaufschlagt wird. Sollten sich während der Befüllung des Spaltraumes 32 Gasblasen entwickeln, so steigen diese nach oben in Richtung auf die zu beschichtende Oberfläche 30 des Innenausbauteiles 12 und dringen in dessen poröse Oberfläche ein, so daß die Gasblasen für den Betrachter nach der Aushärtung des Oberflächenbeschichtungsmateriales nicht erkennbar sind.

## Patentansprüche

1. Verfahren zur Oberflächenbeschichtung eines Innenausbauteiles (12) für Kraftfahrzeuge, wobei man das Innenausbauteil (12) im Bereich seiner zu beschichtenden Oberfläche (30) im Abstand zu einer Wandung eines Formteils (14; 62, 63) positioniert, so daß sich zwischen der zu beschichtenden Oberfläche (30) und der Wandung ein Spaltraum (32) ausbildet, in den Spaltraum (32) ein flüssiges Oberflächenbeschichtungsmaterial einfüllt und unter Beaufschlagung mit UV-Strahlung aushärtet, **dadurch gekennzeichnet, daß** man das Innenausbauteil (12) mit dem Formteil (14; 62, 63) verspannt.

2. Verfahren nach Anspruch 1, **dadurch gekennzeichnet, daß** man das Oberflächenbeschichtungsmaterial unter einem Überdruck von mindestens 0,2 bar in den Spaltraum (32) einfüllt.

3. Verfahren nach Anspruch 1 oder 2, **dadurch gekennzeichnet, daß** man das Oberflächenbeschichtungsmaterial unter einem Überdruck von ca. 0,3 bar bis etwa 3,5 bar einfüllt.

4. Verfahren nach einem der voranstehenden Ansprüche, **dadurch gekennzeichnet, daß** man ein mindestens zwei Komponenten umfassendes flüssiges Oberflächenbeschichtungsmaterial verwendet mit einem Kunstharz als einer ersten Komponente und mit UV-strahlungsempfindlichen Sensibilisatoren als einer zweiten Komponente.

5. Verfahren nach Anspruch 4, **dadurch gekennzeichnet, daß** man ein Kunstharz auf Polyurethan-, Polyester-, Acryl- oder Epoxybasis verwendet.

6. Verfahren nach einem der voranstehenden Ansprüche, **dadurch gekennzeichnet, daß** man das Oberflächenbeschichtungsmaterial durch das entsprechend strahlungsdurchlässig ausgebildete Formteil (14; 62, 63) hindurch mit UV-Strahlung beaufschlagt.

7. Verfahren nach Anspruch 6, **dadurch gekennzeichnet, daß** man das Formteil (62, 63) mehrteilig ausbildet mit einem im wesentlichen der Gestalt der zu beschichtenden Oberfläche (30) des Innenausbauteiles (12) entsprechenden, UV-strahlungsdurchlässigen Formwerkzeug (64) und mit einem das Formwerkzeug (64) abstützenden Stützelement (62).

8. Verfahren nach Anspruch 6 oder 7, **dadurch gekennzeichnet, daß** man für das Formteil (14; 62, 63) ein Silikonmaterial verwendet.

9. Verfahren nach Anspruch 7 oder 8, **dadurch gekennzeichnet, daß** man für das Formwerkzeug (64) ein Silikonmaterial verwendet.

10. Verfahren nach Anspruch 7, 8 oder 9, **dadurch gekennzeichnet, daß** man für das Stützelement (62) ein UV-strahlungsdurchlässiges Kunststoff- oder Glasmaterial verwendet.

11. Verfahren nach Anspruch 10, **dadurch gekennzeichnet, daß** man für das Stützelement (62) Quarzglas verwendet.

12. Verfahren nach einem der voranstehenden Ansprüche, **dadurch gekennzeichnet, daß** man das zu beschichtende Innenausbauteil (12) von oben auf das Formteil (14; 62, 63) aufsetzt, so daß die zu beschichtende Oberfläche (30) während der Beschichtung die Unterseite des Innenausbauteiles (12) bildet.

13. Verfahren nach einem der voranstehenden Ansprüche, **dadurch gekennzeichnet, daß** man ein Formteil (14; 62, 63) verwendet, daß auf seiner dem Innenausbauteil (12) zugewandten Oberfläche Strukturierungen aufweist.

14. Vorrichtung zur Durchführung des Verfahrens nach einem der voranstehenden Ansprüche, mit einem Formteil (14; 62, 64), an das das zu beschichtende Innenausbauteil (12) unter Ausbildung eines Spaltraumes (32) anlegbar ist, **dadurch gekennzeichnet, daß** das Formteil (14; 64, 62) zumindest im Bereich der zu beschichtenden Oberfläche (30) des Innenausbauteils (12) UV-strahlungsdurchlässig ausgebildet ist und daß die Vorrichtung (10; 60) eine Spanneinrichtung (18) zum Verspannen des Innenausbauteiles (12) mit dem Formteil (14; 62, 64) sowie eine UV-Strahlungsquelle (47) aufweist.

15. Vorrichtung nach Anspruch 14, **dadurch gekennzeichnet, daß** die Spanneinrichtung (18) einen das Formteil (14; 62, 64) stützenden Rahmen (16) umfaßt sowie ein an der dem Formteil (14; 62, 64) abgewandten Seite (41) an das Innenausbauteil (14) anlegbares Spannelement (22).

16. Vorrichtung nach Anspruch 14 oder 15, **dadurch gekennzeichnet, daß** das Formteil ein UV-strahlungsdurchlässiges, mechanisch belastbares Stützelement (62) umfaßt.

17. Vorrichtung nach Anspruch 16, **dadurch gekennzeichnet, daß** das Stützelement (18) aus UV-strahlungsdurchlässigem Kunststoff- oder Glasmaterial gefertigt ist.

18. Vorrichtung nach Anspruch 16 oder 17, **dadurch gekennzeichnet, daß** das Stützelement (62) aus Quarzglas gefertigt ist.

19. Vorrichtung nach einem der Ansprüche 14 bis 18, **dadurch gekennzeichnet, daß** das Formteil ein im wesentlichen der Gestalt der zu beschichtenden Oberfläche (30) entsprechendes, UV-strahlungsdurchlässiges Formwerkzeug (64) aufweist.

20. Vorrichtung nach Anspruch 19, **dadurch gekennzeichnet, daß** das Formwerkzeug (64) aus Silikon gefertigt ist.

21. Vorrichtung nach einem der Ansprüche 14 bis 20, **dadurch gekennzeichnet, daß** die Vorrichtung (10) ein das Innenausbauteil (12) im Bereich der zu beschichtenden Oberfläche (30) in Umfangsrichtung umgebendes Dichtungselement (28) umfaßt.

22. Vorrichtung nach Anspruch 21, **dadurch gekennzeichnet, daß** das Dichtungselement (28) einstückig mit dem Formwerkzeug (64) verbunden ist.

23. Vorrichtung nach einem der Ansprüche 14 bis 22, **dadurch gekennzeichnet, daß** das Formteil (62, 64) eine Aufnahme (68) zur Ausbildung des Spaltraumes (32) ausbildet, auf die das Innenausbauteil (12) aufsetzbar ist.

24. Vorrichtung nach einem der Ansprüche 14 bis 23, **dadurch gekennzeichnet, daß** die Vorrichtung (10) mindestens ein Abstandselement (43) umfaßt, das im Bereich der zu beschichtenden Oberfläche (30) des Innenausbauteiles (12) positionierbar ist.

25. Vorrichtung nach Anspruch 24, **dadurch gekennzeichnet, daß** das mindestens eine Abstandselement (43) aus Silikon oder aus poliertem Metall gefertigt ist.

26. Innenausbauteil für Kraftfahrzeuge, insbesondere Holzformteil, hergestellt unter Anwendung des Verfahrens gemäß einem der Ansprüche 1 bis 13.

## Claims

1. A method for the surface coating of an interior fitting (12) for motor vehicles, whereby the interior fitting (12) is positioned in the region of its surface (30) to be coated spaced from a wall of a moulding part (14; 62, 64) so that between the surface (30) to be coated and the wall a clearance (32) is formed, into which clearance (32) a liquid surface coating material is filled and hardened by being exposed to UV radiation,
**characterised in that** the interior fitting (12) is braced with the moulding part (14; 62, 64).

2. A method according to Claim 1,
**characterised in that** the surface coating material is introduced into the clearance (32) under an overpressure of at least 0.2 bar.

3. A method according to Claim 1 or 2,
**characterised in that** the surface coating material is introduced under an overpressure of roughly 0.3 bar to roughly 3.5 bar.

4. A method according to one of the preceding Claims,
**characterised in that** a liquid surface coating material comprising at least two components is used, with an artificial resin as a first component and with sensitisers sensitive to UV radiation as a second component.

5. A method according to Claim 4,
**characterised in that** an artificial resin on a polyurethane, polyester, acrylic or epoxy base is used as.

6. A method according to one of the preceding Claims,
**characterised in that** the surface coating material is exposed to UV radiation through the moulding part (14; 62, 64) which is accordingly constructed to transmit radiation.

7. A method according to Claim 6,
**characterised in that** the moulding part (62, 64) is constructed in several parts with a forming tool (64) which substantially corresponds to the shape of the surface to be coated (30) of the interior fitting (12) and transmits UV radiation and with a support member (62) supporting the moulding tool (64).

8. A method according to Claim 6 or 7,
**characterised in that** a silicon material is used for the moulding part (14; 62, 64).

9. A method according to Claim 7 or 8,
**characterised in that** a silicon material is used for the moulding tool (64).

10. A method according to Claim 7, 8 or 9,
**characterised in that** a plastic or glass material which transmits UV radiation is used for the support member (62).

11. A method according to Claim 10,
**characterised in that** quartz glass is used for the support member (62).

12. A method according to one of the preceding Claims,
**characterised in that** the interior fitting (12) to be coated is placed from above onto the moulding part (14; 62, 64) so that the surface to be coated (30) forms the underside of the interior fitting (12) during coating.

13. A method according to one of the preceding Claims,
**characterised in that** a moulding part (14; 62, 64) is used which comprises structures on its surface closer to the interior fitting (12).

14. An apparatus for performing the method according to one of the preceding Claims, having a moulding part (14; 62, 64) against which the interior component (12) to be coated can be placed with the formation of a clearance (32),
**characterised in that** the moulding part (14; 64, 62) is constructed to transmit UV radiation at least in the region of the surface to be coated (30) of the interior fitting (12)
and **in that** the apparatus (10; 60) comprises a clamping device (18) for bracing the interior fitting (12) with the moulding part (14; 62, 64) and also a UV radiation source (47).

15. An apparatus according to Claim 14,
**characterised in that** the clamping device (18) comprises a frame (16) supporting the moulding part (14; 62, 64) and also a clamping member (22) which can be placed against the interior fitting (14) on the side (41) further from the moulding part (14; 62, 64).

16. An apparatus according to Claim 14 or 15,
**characterised in that** the moulding part comprises a mechanically loadable support member (62) which transmits UV radiation.

17. An apparatus according to Claim 16,
**characterised in that** the support member (18) is produced from plastic or glass material which transmits UV radiation.

18. An apparatus according to Claim 16 or 17,
**characterised in that** the support member (62) is produced from quartz glass.

19. An apparatus according to one of Claims 14 to 18,
**characterised in that** the moulding part comprises a moulding tool (64) which substantially corresponds to the shape of the surface (30) to be coated and transmits UV radiation.

20. An apparatus according to Claim 19,
**characterised in that** the moulding tool (64) is produced from silicon.

21. An apparatus according to one of Claims 14 to 20,
**characterised in that** the apparatus (10) comprises a sealing element (28) which surrounds the interior fitting (12) in the circumferential direction in the region of the surface to be coated (30).

22. An apparatus according to Claim 21,
**characterised in that** the sealing element (28) is connected in one piece to the moulding tool (64).

23. An apparatus according to one of Claims 14 to 22,
**characterised in that** the moulding part (62, 64) forms a seat (68) for forming the gap (32) onto which the interior fitting (12) can be placed.

24. An apparatus according to one of Claims 14 to 23,
**characterised in that** the apparatus (10) comprises at least one spacer element (43) which can be positioned in the region of the surface to be coated (30) of the interior fitting (12).

25. An apparatus according to Claim 24,
**characterised in that** at least one spacer element (43) is produced from silicon or from polished metal.

26. An interior fitting for motor vehicles, in particular a wooden moulding part, manufactured by using the method according to one of Claims 1 to 13.

## Revendications

1. Procédé de revêtement de la surface d'une pièce de finition intérieure (12) de véhicules automobiles, dans lequel on positionne la pièce de finition intérieure (12) de façon à placer sa surface à revêtir (30) à distance d'une paroi d'une pièce de formage (14 ; 62, 64) en ménageant entre la surface à revêtir (30) et la paroi un espace interstitiel (32), et on injecte dans ledit espace interstitiel (32) un matériau de revêtement de surface liquide qui durcit lorsqu'il est soumis à un rayonnement UV, **caractérisé en ce que** l'on étançonne la pièce de finition intérieure (12) avec la pièce de formage (14 ; 62, 64).

2. Procédé selon la revendication 1, **caractérisé en ce que** l'on injecte le matériau de revêtement de surface dans l'espace interstitiel (32) avec une surpression d'au moins 0,2 bar.

3. Procédé selon la revendication 1 ou 2, **caractérisé en ce que** l'on injecte le matériau de revêtement de surface avec une surpression comprise entre environ 0,3 bar et environ 3,5 bars.

4. Procédé selon l'une des revendications précédentes, **caractérisé en ce que** l'on utilise un matériau de revêtement de surface liquide comportant au moins deux composants, le premier composant étant constitué par une résine synthétique et le deuxième composant étant constitué par des sensibilisateurs sensibles au rayonnement UV.

5. Procédé selon la revendication 4, **caractérisé en ce que** l'on utilise une résine synthétique à base de polyuréthane, de polyester, d'acrylique, ou d'époxy.

6. Procédé selon l'une des revendications précédentes, **caractérisé en ce que** l'on soumet le matériau de revêtement de surface à un rayonnement UV passant à travers la pièce de formage (14 ; 62, 64) qui est transparente aux rayonnements.

7. Procédé selon la revendication 6, **caractérisé en ce que** la pièce de formage (62, 64) a une conformation en plusieurs parties, en comprenant un outil de formage (64) transparent au rayonnement UV qui correspond sensiblement à la forme de la surface à revêtir (30) de la pièce de finition intérieure (12) et un élément de support (62) qui supporte l'outil de formage (64).

8. Procédé selon la revendication 6 ou 7, **caractérisé en ce que** l'on utilise pour la pièce de formage (14 ; 62, 64) un matériau de silicone.

9. Procédé selon la revendication 7 ou 8, **caractérisé en ce que** l'on utilise pour l'outil de formage (64) un matériau de silicone.

10. Procédé selon la revendication 7, 8 ou 9,
**caractérisé en ce que** l'on utilise pour l'élément de support (62) une matière plastique ou du verre transparent au rayonnement UV.

11. Procédé selon la revendication 10, **caractérisé en ce que** l'on utilise pour l'élément de support (62) du verre quartzeux.

12. Procédé selon l'une des revendications précédentes, **caractérisé en ce que** l'on place la pièce de finition intérieure (12) à revêtir depuis le haut sur la pièce de formage (14 ; 62, 64), de sorte que la surface (30) à revêtir forme la face inférieure de la pièce de finition intérieure (12) pendant le revêtement.

13. Procédé selon l'une des revendications précédentes, **caractérisé en ce que** l'on utilise une pièce de formage (14 ; 62, 64), dont la surface, qui est dirigée vers la pièce de finition intérieure (12), comporte des structurations.

14. Dispositif pour la mise en oeuvre du procédé selon l'une des revendications précédentes, comportant une pièce de formage (14 ; 62, 64) sur laquelle peut être appliquée la pièce de finition intérieure (12) en ménageant un espace interstitiel (32), **caractérisé en ce que** la pièce de formage (14 ; 64, 62) est prévue pour être transparente au rayonnement UV au moins dans la région de la surface à revêtir (30) de la pièce de finition intérieure (12), et **en ce que** le dispositif (10 ; 60) comporte un dispositif tendeur (18) destiné à étançonner la pièce de finition intérieure (12) avec la pièce de formage (14 ; 62, 64), ainsi qu'une source de rayonnement UV (47).

15. Dispositif selon la revendication 14, **caractérisé en ce que** le dispositif tendeur (18) comporte un cadre (16) qui supporte la pièce de formage (14 ; 62, 64), ainsi qu'un élément tendeur (22) qui peut être appliqué sur la pièce de finition intérieure (14) du côté (41) opposé à la pièce de formage (14 ; 62, 64).

16. Dispositif selon la revendication 14 ou 15, **caractérisé en ce que** la pièce de formage comporte un élément de support (62) qui est transparent au rayonnement UV et qui peut être contraint mécaniquement.

17. Dispositif selon la revendication 16, **caractérisé en ce que** l'élément de support (18) est en matière plastique ou en verre transparent au rayonnement UV.

18. Dispositif selon la revendication 16 ou 17, **caractérisé en ce que** l'élément de support (62) est en verre quartzeux.

19. Dispositif selon l'une des revendications 14 à 18, **caractérisé en ce que** la pièce de formage comporte un outil de formage (64) transparent au rayonnement UV qui correspond essentiellement à la forme de la surface à revêtir (30).

20. Dispositif selon la revendication 19, **caractérisé en ce que** l'outil de formage (64) est en silicone.

21. Dispositif selon l'une des revendications 14 à 20, **caractérisé en ce que** le dispositif (10) comprend un élément d'étanchéité (28) entourant périphériquement la pièce de finition intérieure (12) dans la région de la surface à revêtir (30).

22. Dispositif selon la revendication 21, **caractérisé en ce que** l'élément d'étanchéité (28) est lié en étant d'une pièce avec l'outil de formage (64).

23. Dispositif selon l'une des revendications 14 à 22, **caractérisé en ce que** la pièce de formage (62, 64) présente un logement (68) qui est destiné à ménager l'espace interstitiel (32) et sur lequel peut être appliquée la pièce de finition intérieure (12).

24. Dispositif selon l'une des revendications 14 à 23, **caractérisé en ce que** le dispositif (10) comporte au moins un élément d'écartement (43) qui peut être placé dans la région de la surface à revêtir (30) de la pièce de finition intérieure (12).

25. Dispositif selon la revendication 24, **caractérisé en ce que** ledit au moins un élément d'écartement (43) est en silicone ou en métal poli.

26. Pièce de finition intérieure de véhicules automobiles, en particulier pièce formée en bois, réalisée en mettant en oeuvre le procédé selon l'une des revendications 1 à 13.
